Europäisches Patentamt

(19) European Patent Office

Office européen des brevets

(11) Numéro de publication: **0 133 089**

**A1**

(12) **DEMANDE DE BREVET EUROPEEN**

(21) Numéro de dépôt: **84401456.3**

(22) Date de dépôt: **10.07.84**

(51) Int. Cl.⁴: **H 02 H 3/087**
**H 02 H 3/06**

(30) Priorité: **25.07.83 FR 8312505**

(43) Date de publication de la demande:
**13.02.85 Bulletin 85/7**

(84) Etats contractants désignés:
**BE DE FR GB IT NL SE**

(71) Demandeur: **LA TELEMECANIQUE ELECTRIQUE**
**33 bis, avenue du Maréchal Joffre**
**F-92000 Nanterre(FR)**

(72) Inventeur: **Gohl, Pierre-Paul**
**15, avenue Lamartine Villa le Tonkin**
**F-06600 Antibes(FR)**

(74) Mandataire: **Marquer, Francis et al,**
**35, Avenue Victor Hugo Résidence Chamfleury**
**F-78180 Voisins-le-Bretonneux(FR)**

(54) **Circuit de commande de puissance, à courant continu, avec protection contre les surcharges et les courts-circuits.**

㊿ Circuit de commande de puissance, à courant continu, avec protection contre les surcharges et les courts-circuits, comportant une porte (2) dont une entrée (21) reçoit un signal de commande par tout ou rien, un amplificateur de sortie connecté à cette porte, un organe détecteur de surintensité du courant de sortie et des moyens, commandés par ledit organe, d'appliquer à l'autre entrée de la porte, un signal logique d'inhibition temporaire découpé périodiquement à une cadence appropriée pour que la puissance de sortie du circuit soit réduite, en cas de surcharge, à une valeur temporairement acceptable pour le circuit, caractérisé en ce que lesdits moyens comportent un circuit intégrateur (70-71) associé à un circuit de mise en forme à seuil (8) et constituent, avec l'organe détecteur de surintensité (6), une boucle de contre-réaction qui entre en régime d'oscillations de relaxation pendant la durée de la surcharge.

Application à la commande des actionneurs dans les automatismes.

EP 0 133 089 A1

./...

FIG.1

- 1 -

CIRCUIT DE COMMANDE DE PUISSANCE, A COURANT CONTINU, AVEC
PROTECTION CONTRE LES SURCHARGES ET LES COURTS-CIRCUITS.

L'invention se rapporte aux circuits de commande de puissance à courant continu et, plus particulièrement, à ceux qui sont utilisés pour la commande des actionneurs dans les automatismes, à partir de signaux de commande délivrés à certains moments aux sorties de l'automatisme.

Ces actionneurs : relais, lampes à incandescence, moteurs, électro-vannes ou autres, peuvent avoir besoin d'une puissance relativement importante et lorsque le dispositif est réalisé sous la forme d'un circuit intégré l'amplificateur de sortie qu'il comporte ne peut supporter sans destruction les puissances absorbées par la charge en cas de surcharge ou de court-circuit sur celle-ci.

Il faut alors trouver un moyen de réduire notablement le courant qui traverse l'amplificateur de sortie dès qu'une surcharge se manifeste et de rétablir immédiatement le courant normal dès que la surcharge a disparu.

Dans le brevet français 2254136 déposé par Siemens Aktiengesellschaft le 27 Novembre 1974, on a décrit un dispositif de protection comportant une porte ET dont une entrée reçoit le signal de commande et dont la sortie est reliée à l'amplificateur de sortie. Dans la sortie de cet amplificateur sont montés un organe limiteur de courant suivi d'un organe capteur. Une tension prélevée aux bornes

- 2 -    0133089

de cet organe capteur est appliquée à un comparateur à seuil qui commande une bascule. Lorsque celle-ci a été commutée par la détection d'une surintensité, elle transmet, à l'autre entrée de la porte ET, des impulsions engendrées par une horloge, ce qui a pour effet de découper le courant de sortie donc de le réduire à une valeur acceptable pendant l'existence de la surcharge.

Ce dispositif présente l'inconvénient de nécessiter une horloge, donc des composants et une surface occupée supplémentaires sur les cartes de circuits, et d'entraîner une consommation supplémentaire d'énergie due au fonctionnement permanent de l'horloge.

Selon DE-A-2 640 337 (BBC), entre le capteur de courant 6 et la porte de commande 2, il est prévu une boucle de limitation comportant un interrupteur 7 à seuil et un circuit 8 de temporisation à l'enclenchement et au déclenchement. Ce dernier est déclenché par une fermeture, même très brève, de l'interrupteur 7, d'où l'inconvénient d'une sensibilité aux impulsions parasites transmises par le capteur de courant et l'interrupteur à seuil.

Selon un brevet BBC ultérieur : FR-A-497 014, entre le capteur 5 et la porte de commande 2, la boucle de limitation comporte un interrupteur à seuil 6 et un retardateur numérique 9-10-13 avec une horloge 14 en aval de l'interrupteur 6.

De brèves fermetures de l'interrupteur 6 perturbent moins ce circuit que celui de DE-A-2 640 337, mais une certaine sensibilité aux parasites subsiste. On notera que la boucle de limitation est essentiellement numérique.

L'invention a pour objet un dispositif exempt des inconvénients ci-dessus, dans lequel le découpage du courant de sortie en cas de surcharge est obtenu par la relaxation interne d'une boucle de contre-réaction, sans faire appel à une horloge extérieure à ladite boucle, et dans lequel ladite boucle est analogique et ne subit aucune perturbation de brèves impulsions parasites transmises depuis le capteur. Ce dispositif applique en outre un courant de rapport cyclique croissant pendant l'allumage d'une lampe à incandescence classique, ce qui en accélère l'allumage.

Le dispositif suivant l'invention comporte une porte dont une entrée reçoit un signal de commande par tout ou rien, un amplificateur de sortie commandé via cette porte, une boucle de contre-réaction comprenant un organe détecteur de surintensité du courant de sortie de l'amplificateur et des moyens, commandés par un signal de surintensité délivré par ledit organe, d'appliquer à l'autre entrée de la porte en cas de surcharge ou de court-circuit, un signal logique d'inhibition périodique obtenu par relaxation de la boucle de contre-réaction à une cadence appropriée pour que la puissance de sortie du circuit soit réduite à une valeur temporairement acceptable pour l'amplificateur du circuit, et est caractérisé en ce que, selon un mode d'exécution préféré, ladite porte est une porte OU, et en ce qu'il est prévu des moyens de réaction adjoints à la porte pour constituer le circuit de mise en forme à seuil.

L'invention sera mieux comprise à la lumière de la description ci-après.

Au dessin annexé :

La figure 1 est un schéma de principe d'un circuit de commande conforme à l'invention dont,

La figure 2 donne une forme d'exécution préférée, et

Les figures 3 et 4 représentent respectivement la tension aux bornes du condensateur 71 et le courant de sortie Is lorsque la charge est une lampe à filament à coefficient de température positif.

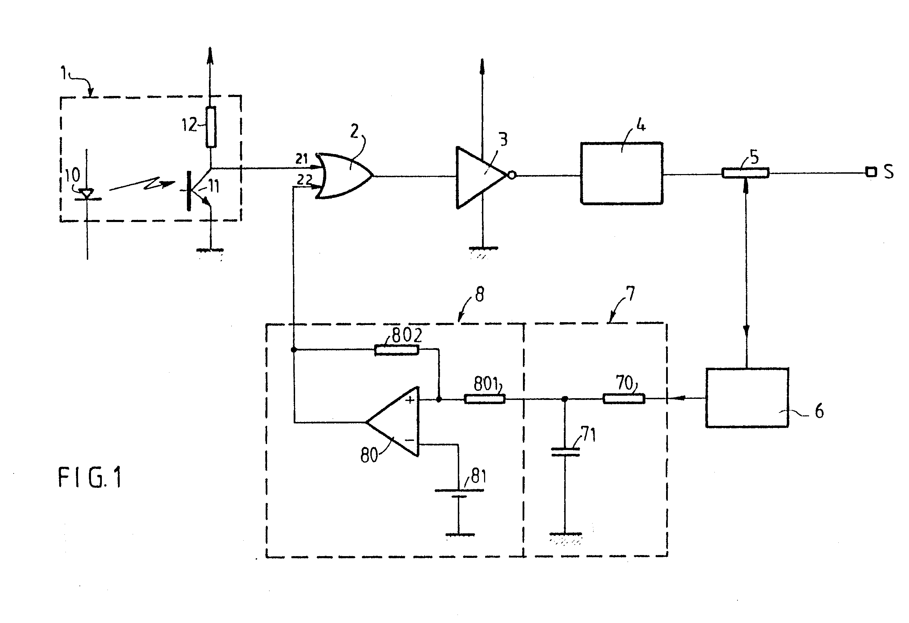

Dans le dispositif de la figure 1, un signal de commande par tout ou rien est appliqué à une diode émettrice de lumière 10 (par exemple par infra-rouge) qui fait partie d'un photo-coupleur 1 comprenant en outre un phototransistor 11 ayant une résistance de charge de collecteur 12. Ce photocoupleur constitue un inverseur dont la sortie est reliée à l'entrée 21 d'une porte OU 2 à deux entrées 21 et 22.

La sortie de cette porte OU commande directement un amplificateur-inverseur 3 dont la sortie est reliée, par un dispositif limiteur instantané d'intensité 4 et un capteur de mesure de courant 5, à une borne de sortie S.

Le signal de mesure d'intensité issu du capteur 5 est appliqué à un détecteur de surintensité 6 dont la sortie est reliée à un circuit de mise en forme à seuil 8 par l'intermédiaire d'un circuit intégrateur 7 ; la sortie du circuit 8 est reliée à la deuxième entrée 22 de la porte 2.

Le circuit intégrateur 7 comprend une résistance 70 et un condensateur 71, tandis que le circuit de déclenchement 8 comprend un amplificateur différentiel 80 et une source de tension continue de référence 81, dont la borne positive est reliée à l'entrée négative de l'amplificateur 80. L'entrée positive de l'amplificateur 80 est reliée au point commun à la résistance 70 et au condensateur 71 par une résistance 801, et à la borne 22 par une résistance 802.

Le fonctionnement du dispositif de la figure 1 est le suivant :

Lorsque la diode 10 reçoit un signal de commande, ce signal est transformé en un zéro logique par le photocoupleur et appliqué à l'une des entrées de la porte 2. En l'absence de surintensité, la sortie du circuit 8 est à zéro et la porte 2 reçoit donc deux zéros logiques et applique un zéro à l'entrée de l'amplificateur-inverseur 3, dont la sortie passe alors à l'état logique "1". Par l'intermédiaire du limiteur instantané d'intensité 4 et du capteur de courant 5, ce signal de sortie est transmis à la borne S et la tension correspondante alimente la charge raccordée à cette borne. Si ladite charge et ladite tension de sortie sont telles que le débit, en régime établi, reste inférieur au seuil du détecteur de surintensité 6, la sortie de ce détecteur reste à zéro et ce niveau logique zéro est transmis par le circuit 8 à l'entrée 22 de la porte 2. Pendant toute la durée du signal de commande, la charge est donc normalement alimentée.

Lorsque l'on interrompt le courant de commande, le collecteur du phototransistor 11 passe au niveau logique 1 et ce niveau est transmis par la porte OU 2 à l'entrée de l'amplificateur-inverseur 3, dont la sortie passe alors à zéro, ce qui annule la tension de la borne S.

Si un court-circuit se produit dans la charge, lorsque l'excitation de la diode 10 fait passer de 1 à zéro l'entrée 21 de la porte 2, l'autre entrée 22 étant à zéro, cette porte transmet un zéro à l'amplificateur inverseur 3, dont la sortie passe à 1, délivrant ainsi le courant d'alimentation destiné à la charge. Cette charge étant en court-circuit, le limiteur instantané d'intensité 4 limite le débit à une valeur supportable, en régime transitoire, pour l'amplificateur 3.

Le capteur de courant 5 transmet un signal de surintensité au détecteur 6, dont la sortie passe alors au niveau logique 1 ; le condensateur de l'intégrateur 7 se charge et, après un délai fixé par la résistance 70 et le condensateur 71, le signal intégré dépasse le seuil de commutation de 0 vers 1 du circuit 8, si bien que la sortie de ce dernier passe à 1, de même que l'entrée 22 de la porte 2. La sortie de cette porte passe alors à 1, ce qui fait passer à zéro la sortie de l'amplificateur-inverseur 3. Le débit de la sortie en court-circuit est alors interrompu et le signal de surintensité issu du capteur 5 s'annule. La sortie du détecteur 6 passe alors de nouveau à zéro et le condensateur 71 commence à se décharger.

Lorsque la tension aux bornes du condensateur 71 passe en deçà du seuil de commutation de 1 vers 0 du circuit 8, la sortie de ce dernier passe à zéro, ainsi que l'entrée 22 de la porte 2. L'excitation de la diode 10 étant maintenue, l'entrée 21 de la porte 2 est encore au niveau zéro si bien que, la sortie de cette porte passe de nouveau à zéro et la sortie de l'amplificateur-inverseur 3 passe de nouveau à "1". Le courant limite s'établit de nouveau dans la charge en court-circuit, le signal de surintensité fait de nouveau passer à "1" la sortie du détecteur 6 et le cycle de charge du condensateur 71 recommence.

Il ressort de la description ci-dessus qu'en présence d'un court-circuit de sortie, le circuit de la figure 1 engendre des oscillations de relaxation, ce qui a pour effet de limiter le débit instantané et la dissipation moyenne à des valeurs acceptables pour l'amplificateur 3.

Si, pendant ce fonctionnement en découpage du courant de sortie par relaxation, la charge de sortie passe du court-circuit à une impédance compatible avec les caractéristiques normales du dispositif, le signal de surintensité disparaît. La relaxation de la boucle refermée par l'intégrateur 7 et le circuit de déclenchement 8 s'interrompt ; l'entrée 22 de la porte 2 reste à zéro et le signal appliqué à la diode 10 est normalement transmis par la porte 2 ; la sortie de l'amplificateur-inverseur 3, reste alors alimentée en régime établi jusqu'à l'interruption du signal de commande appliqué à la diode 10.

Dans le cas particulier où le circuit de la figure 1 est utilisé pour l'alimentation d'une lampe à incandescence, à la mise sous tension de cette lampe, ayant son filament froid, par un commutateur, le courant initial peut atteindre l'ordre de grandeur de dix fois le courant nominal et décroître ensuite jusqu'à cette valeur nominale en quelques dizaines de millisecondes.

A la mise sous tension d'une telle lampe à incandescence par le circuit de la figure 1, le limiteur 4 assure la protection de l'amplificateur 3 contre un appel de courant trop important et le régime de découpage par relaxation est mis

- 7 -                    0133089

en service. Le dispositif délivre une énergie de sortie suffisante pour échauffer rapidement le filament et l'amener ainsi à son régime nominal. Le signal de surintensité disparait alors, ce qui permet à l'amplificateur-inverseur 3 d'alimenter la lampe en permanence jusqu'à l'interruption du signal de commande.

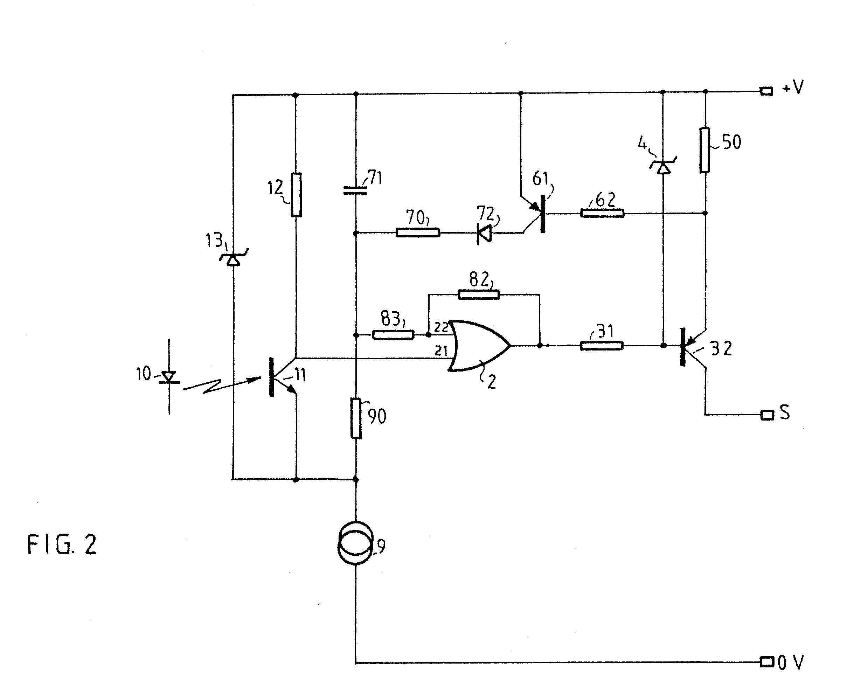

Dans l'exemple pratique de la figure 2, on retrouve la plupart des éléments de la figure 1, affectés des mêmes numéros de référence.

Le circuit du photocoupleur 1 comprend, outre les éléments 10-11-12 de la figure 1, une diode de Zener 13 de stabilisation de la tension.

La sortie de la porte OU 2 est reliée, par l'intermédiaire d'une résistance 31, à la base d'un transistor 32 du type PNP qui constitue l'amplificateur-inverseur de sortie. L'émetteur du transistor 32 est relié au pôle positif +V par l'intermédiaire d'une résistance 50 et une diode de Zener 4 est branchée en parallèle sur le circuit série constitué de la résistance 50 et de la jonction base-émetteur du transistor 32, l'anode de la diode de Zener étant reliée au transistor. La résistance de contre-réaction 50, associée à la diode de Zener 4 de limitation de la tension de commande de base du transistor 32, constituent un limiteur instantané d'intensité.

L'organe détecteur de surintensité 6 (figure 1) est constitué par un transistor 61 de type PNP dont la base est reliée, par une résistance 62, au point commun entre la résistance 5 et le transistor 32 et dont le collecteur est relié au condensateur 71 de l'intégrateur 70-71 par une diode 72.

Le point commun à la résistance 70 et au condensateur 71 est relié à l'entrée 22 de la porte 2 par une résistance 83 et, par une résistance 90, au point commun à la diode de Zener 13, au phototransistor 11 et à un générateur de courant constant 9 dont la borne opposée est reliée au OV de la source d'alimentation.

Une résistance 82 relie l'entrée 22 à la sortie de la porte 2.

Le fonctionnement du circuit de la figure 2 est le suivant :

Lorsque la diode 10 reçoit un signal de commande, le phototransistor 11 est saturé. Son collecteur applique alors un zéro logique à l'entrée 21 de la porte 2, dont l'autre entrée 22 est, en l'absence de surintensité, à zéro.

La sortie de la porte 2 passe donc à zéro et, par l'intermédiaire de la résistance 31, commande la base du transistor de sortie 32. En l'absence de surcharge, ce transistor est alors saturé et peut alimenter une charge connectée entre les bornes S et OV. Lorsque l'on interrompt le courant de commande, l'entrée 21 et la sortie de la porte 2 passent de nouveau à 1, ce qui bloque le transistor de sortie 31.

Lorsque la borne de sortie S est en court-circuit avec la borne OV, au moment où l'excitation de la diode 10 sature le phototransistor et fait passer de 1 à zéro l'entrée 21 de la porte 2, l'autre entrée 22 étant à zéro, la sortie de cette porte passe à zéro et commande la conduction du transistor 32, par l'intermédiaire de la résistance 31. Malgré le court-circuit la surintensité instantanée est limitée par la chute de tension aux bornes de la résistance 50, qui s'ajoute à la tension $V_{BE}$ entre base et émetteur du transistor 32 pour constituer une somme qui ne peut dépasser la tension de la diode de Zener 4, sans annuler le courant de base du transistor 32. La surintensité initiale instantanée qui apparaît lors de la commande est donc limitée à une valeur $I_{max}$ telle que $R\ I_{max} + V_{BE} = V_Z$, où R est la valeur de la résistance 50 et $V_Z$ la tension de la diode de Zener 4.

Au moment où cette surintensité limitée apparaît, la tension présente aux bornes de la résistance 50 commande la conduction du transistor détecteur de surintensité 61 qui, en série avec la diode 72 et la résistance 70, décharge le condensateur 71.

- 9 - 0133089

Lorsque cette décharge atteint le niveau pour lequel l'entrée 22 de la porte 2 passe de l'état zéro à l'état "1", la sortie de cette porte passe elle-même de l'état zéro à l'état "1" et la résistance 82 ramène sur l'entrée 22 un échelon positif de tension qui stabilise cette commutation. Ce passage à l'état "1" de la sortie de la porte 2 annule la commande du transistor 32 qui se bloque, annulant le signal de surintensité aux bornes de la résistance 50, ce qui bloque le transistor détecteur 61 et permet au condensateur 71 de se recharger via la résistance 70. Lorsque la charge du condensateur 71 atteint le niveau pour lequel le pont diviseur 82, 83 fait passer de nouveau l'entrée 22 de la porte 2 à zéro, la sortie de cette porte passe aussi à zéro et la résistance 82 ramène sur l'entrée 22 un échelon négatif de tension qui stabilise cette commutation. Ce même signal zéro en sortie de la porte 2 provoque de nouveau la conduction du transistor de sortie 32 : le signal de surintensité limitée réapparaît. Le circuit continue ainsi à engendrer des oscillations de relaxation jusqu'à la disparition du signal de commande ou du court-circuit de sortie. Le courant limite instantané, la fréquence et le rapport cyclique de découpage du signal de sortie correspondant à cette relaxation limitent la dissipation du transistor 32 à une valeur compatible avec ses caractéristiques.

La description ci-dessus met en évidence le fait que la porte 2, grâce au pont de résistances 82, 83, outre sa fonction OU, remplit une fonction de mise en forme à seuil équivalente à celle du circuit 8 de la figure 1, mais avec un montage simplifié.

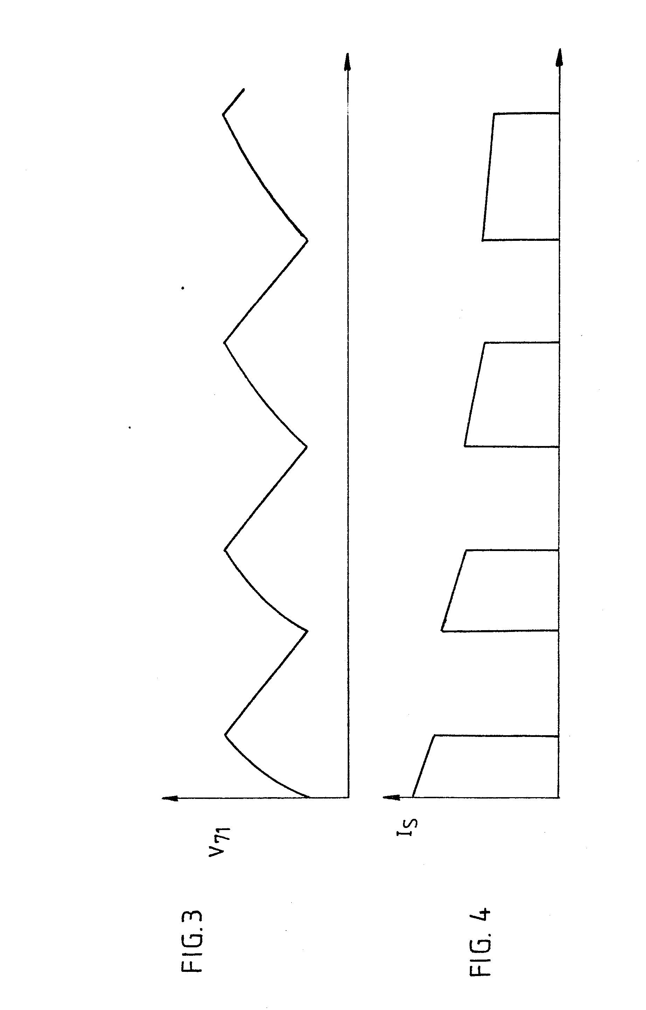

Dans le cas de l'allumage d'une lampe à incandescence dont la résistance à froid correspond à un courant initial supérieur au seuil d'intervention du détecteur 6 du circuit de la figure 1, l'intégrateur 7 et le circuit à seuil 8 imposent un régime de relaxation (figures 3 et 4) dont les créneaux de coupure sont fixes et les créneaux de conduction croissants en charge, puisque ces conductions sont à courant moyen constant au travers d'une résistance croissante ; il en résulte une alimentation transitoire à rapport cyclique croissant qui accélère l'allumage de la lampe sans dépasser les limites acceptables pour l'amplificateur 3.

Le circuit de la figure 2 donne le même régime transitoire pour l'allumage de lampes à incandescence faisant initialement intervenir le détecteur 61, l'intégrateur 70, 71, 72 et le circuit à seuil 2, 82, 83.

L'invention couvre également des versions simplifiées des circuits qui ne comporteraient pas de limiteur instantané d'intensité et tout autre mode de réalisation mettant en œuvre le même découpage, par relaxation d'une boucle, de la tension de sortie en cas de surintensité.

Il va de soi que diverses variantes pourront être imaginées et diverses modifications apportées aux circuits décrits et représentés, sans s'écarter de l'esprit de l'invention.

L'application aux sorties d'automatismes n'est évidemment pas limitative.

- 11 - 0133089

**Revendications de brevet**

1. Circuit de commande de puissance, à courant continu, avec protection contre les surcharges et les courts-circuits, comportant une porte (2) dont une entrée (21) reçoit un signal de commande par tout ou rien, un amplificateur de sortie commandé via cette porte, une boucle de contre-réaction comprenant un organe détecteur de surintensité du courant de sortie de l'amplificateur et des moyens, commandés par un signal de surintensité délivré par ledit organe, d'appliquer à l'autre entrée (22) de la porte en cas de surchage ou de court-circuit, un signal logique d'inhibition périodique obtenu par relaxation de la boucle de contre-réaction à une cadence appropriée pour que la puissance de sortie du circuit soit réduite à une valeur temporairement acceptable pour l'amplificateur du circuit, caractérisé en ce que lesdits moyens comportent un circuit intégrateur du signal de surintensité (70, 71) suivi d'un circuit de mise en forme à seuil (8) entre ledit organe détecteur de surintensité (6) et ladite porte (2).

2. Circuit de commande selon la revendication 1, caractérisé en ce que ladite porte (2) est une porte OU, et en ce qu'il est prévu des moyens de réaction (82, 83) adjoints à la porte (2) pour constituer le circuit de mise en forme à seuil (8)..

3. Circuit de commande selon l'une des revendications 1 et 2, caractérisé par un photo-coupleur (10-11) relié à une entrée (21) de ladite porte.

4. Circuit de commande selon l'une des revendications 1 à 3, caractérisé en ce que l'amplificateur de sortie comprend un transistor (32) dont la base est reliée à la sortie de la porte (2) et dont l'émetteur est relié au pôle positif (+ V)

0133089

d'une source de tension continue par l'intermédiaire d'une résistance (50), une diode de Zener (4) étant branchée entre la base et ledit pôle positif, et l'entrée de l'organe détecteur d'intensité (61) étant reliée au point commun entre ladite résistance (50) et ledit émetteur.

FIG.1

0133089

FIG. 2

0133089

FIG.3

$V_{71}$

FIG. 4

$I_S$

**0133089**

Numéro de la demande

Office européen
des brevets

**RAPPORT DE RECHERCHE EUROPEENNE**

EP 84 40 1456

## DOCUMENTS CONSIDERES COMME PERTINENTS

| Categorie | Citation du document avec indication, en cas de besoin, des parties pertinentes | Revendication concernée | CLASSEMENT DE LA DEMANDE (Int Cl 4) |
|---|---|---|---|
| D,X | DE-A-2 640 337 (BBC) <br> * En entier * <br><br> --- | 1-3 | H 02 H 3/087 <br> H 02 H 3/06 |
| D,X | FR-A-2 497 014 (B.B.C.) <br> * Figure 1; page 4, ligne 45 - page 5, ligne 26 * <br><br> --- | 1 | |
| A | DE-A-1 763 890 (SIEMENS) <br> * En entier * <br><br> --- | 1 | |
| A | DE-A-2 640 338 (BBC) <br> * Figure; revendications 1,2 * <br><br> --- | 1 | |
| D,A | FR-A-2 254 136 (SIEMENS) <br> * Figures * <br><br> ----- | 1 | |

DOMAINES TECHNIQUES
RECHERCHES (Int. Cl.4)

H 02 H

Le présent rapport de recherche a été établi pour toutes les revendications

| Lieu de la recherche | Date d'achèvement de la recherche | Examinateur |
|---|---|---|
| LA HAYE | 19-10-1984 | KOLBE W.H. |